# FASCICULE DE BREVET EUROPEEN

(11) **EP 4 008 425 B1**
(45) Date de publication et mention de la délivrance du brevet: **13.09.2023**
(21) Numéro de dépôt: 21212233.7
(22) Date de dépôt: 03.12.2021
(51) Int. Cl.: B01D 53/30, B01D 53/34, B01D 53/64, B01D 53/83, F23J 15/00, F23J 15/02

(54) **PROCÉDÉ DE DÉMERCURISATION DE FUMÉES**
VERFAHREN ZUR ENTFERNUNG VON QUECKSILBER AUS RAUCHGASEN
METHOD FOR REMOVING MERCURY FROM FUMES

(30) Priorité: 04.12.2020 FR 2012708
(43) Date de publication de la demande: 08.06.2022
(73) Titulaire: LAB, 69007 Lyon (FR)
(72) Inventeur: SIRET, Bernard, 69800 SAINT-PRIEST (FR); VUONG, François, 83400 HYERES (FR); BOURHIS, Benoît, 69126 BRINDAS (FR)
(74) Mandataire: Lavoix

(56) Documents cités:
- EP-A1- 2 177 254
- WO-A1-2016/132894
- WO-A1-2016/193429
- CN-U- 209 997 329
- JP-A- 2017 127 830

## Description

La présente invention concerne un procédé de démercurisation de fumées.

Le mercure est un composé naturellement présent et encore utilisé significativement dans l'industrie. Le mercure est toxique sous toutes ses formes. Il est assimilable par pratiquement tous les organismes vivants et de ce fait se concentre au cours de la chaîne alimentaire. In fine, il est absorbé par l'homme et y développe sa toxicité. De ce point de vue, il est de peu d'importance que le mercure soit présent sous forme de métal, de sels organiques ou de composés organiques comme le méthylmercure.

L'industrie et les activités humaines rejettent dans l'atmosphère du mercure qui peut être transporté sur de très grandes distances. C'est pourquoi la plupart des pays ont mis en place des réglementations contraignantes afin de limiter les quantités de mercure qui sont rejetées dans l'environnement. Parmi les industries pouvant rejeter du mercure, on trouve les usines de production du chlore, les fonderies, les centrales thermiques au charbon qui contient naturellement du mercure, les cimenteries, et les incinérateurs de déchets. A titre d'exemple, le seuil réglementaire en France est actuellement de 50 µg/Nm³ pour les incinérateurs de déchets et il est régulièrement abaissé dans le cadre de durcissements de la réglementation.

Plusieurs approches sont envisageables pour réduire les émissions de mercure.

Tout d'abord, on peut restreindre l'utilisation du mercure, en modifiant les procédés de production en s'affranchissant de l'utilisation du mercure. Cette approche n'est toutefois pas toujours possible.

Une autre approche consiste à mettre en oeuvre des procédés de traitement du flux, liquide ou gazeux, transportant le mercure. L'invention s'intéresse ainsi aux procédés de démercurisation de fumées issues d'installations de combustion, contenant des vapeurs de mercure. Parmi ces procédés, on distingue les procédés humides et les procédés secs. Dans les procédés humides, les fumées sont lavées et le mercure ainsi que d'autres polluants contenus dans les fumées sont transférés vers la phase liquide pour ensuite y être précipités, stabilisés et séparés. Dans les procédés secs, concernés par l'invention, le mercure est capté par un réactif de démercurisation, tel que des adsorbants, typiquement le charbon actif, du coke de lignite, des additifs halogénés, et des additifs soufrés, pour ne citer que ces quelques exemples. Ce réactif de démercurisation, qui se présente généralement sous forme d'une poudre, est injecté dans les fumées à traiter et fixe, notamment par adsorption, le mercure présent en phase gazeuse, avant d'être ensuite séparé des fumées par un séparateur gaz-solide, tel des filtres à manches ou des électrofiltres.

Par exemple, WO2016/132894 divulgue un procédé de démercurisation de fumées qui sont issues d'un incinérateur et qui passent dans une chaudière. Les fumées à traiter sont envoyées à un séparateur gaz-solide en amont duquel un réactif de démercurisation est introduit dans les fumées. Un analyseur mesure la concentration de mercure dans les fumées en amont du point d'introduction du réactif de démercurisation dans les fumées à traiter. La concentration de mercure ainsi mesurée est utilisée pour doser la quantité du réactif de démercurisation introduite dans les fumées à traiter, en utilisant une fonction de dosage dont différentes formes sont envisagées dans WO2016/132894, ces différentes formes de la fonction de dosage étant croissantes en fonction de la concentration de mercure mesurée.

Les procédés secs de démercurisation sont efficaces, mais peuvent être mis à l'épreuve si la concentration en mercure dans les fumées entrant dans l'installation de traitement correspondante présente un pic de mercure, c'est-à-dire varie très rapidement et avec une grande amplitude. Par exemple, dans les incinérateurs de déchets en France, les concentrations ordinaires de mercure dans les fumées à traiter sont généralement de l'ordre de 100 µg/Nm³, alors que cette concentration peut passer soudainement, en quelques minutes, à des valeurs bien supérieures à 1000 µg/Nm³ lors de la combustion d'un déchet à forte teneur en mercure. Ces pics de mercure peuvent arriver fréquemment, en donnant un profil en peigne au signal de concentration en mercure à l'entrée de l'installation de traitement de fumées. Dans ces conditions, un procédé calibré peut présenter de réelles difficultés à réagir assez vite pour traiter le mercure entrant dans l'installation de traitement de fumées. Si le procédé ne réagit pas assez rapidement ou n'est pas adapté, cela peut conduire à des dépassements, par rapport aux limites réglementaires, des émissions de mercure dans les fumées en aval de l'installation de traitement de fumées, mais aussi à des surconsommations en réactif de démercurisation.

Un autre aspect, souvent négligé, en lien avec les pics de mercure est que le temps de séjour du mercure dans l'installation de traitement de fumées peut être prolongé en raison d'un relargage diffus du mercure dans les fumées circulant dans l'installation.

En effet, lors d'un pic de mercure, le passage d'une forte concentration de mercure dans l'installation de traitement de fumées, même pendant une durée courte, tend à contaminer les gaines et les équipements de l'installation, le mercure étant facilement adsorbé sur les parois de ces gaines et de ces équipements, en particulier en dessous de 200°C. Une fois que le pic de mercure est passé, le mercure se désorbe lentement des parois et est ainsi relargué de manière différée par rapport au pic de mercure, en étalant les émissions de mercure dans toute l'installation de traitement de fumée. Le profil de concentration du mercure s'étale ainsi temporellement le long de l'installation de traitement de fumées. Autrement dit, un effet mémoire comparable à l'effet mémoire connu pour les dioxines existe. Cet effet mémoire est d'autant plus important que la chaîne de traitement que traversent les fumées dans l'installation avant d'être rejetées à l'environnement est longue et complexe. A cet égard, des unités de dénitrification catalytique de l'installation de traitement de fumées, placées en aval du séparateur gaz-solide, sont particulièrement sensibles à ce phénomène car les matériaux utilisés dans ces unités de dénitrification catalytique sont capables d'adsorber le mercure, de réagir chimiquement avec le mercure, généralement par oxydation, et de stocker une quantité significative de mercure, avant de relarguer ce dernier de manière différée, pour différentes raisons comme un excès de polluants acides dans les fumées ou bien une hausse de température.

Par ailleurs, le relargage diffus du mercure peut aussi résulter du fait que, après le passage d'un pic de mercure, une grande partie du mercure se retrouve piégée dans les solides collectés par le séparateur gaz-solide, ces solides collectés formant un gâteau de filtration dans le séparateur. Une fois que le pic de mercure est passé, ce gâteau de filtration risque de relarguer le mercure qu'il contient dans les fumées traversant le gâteau de filtration, le mercure étant alors réémis dans les fumées sortant du séparateur alors que la teneur en mercure dans les fumées entrant dans l'installation de traitement de fumées sera redescendue à une valeur ordinaire, par exemple de l'ordre de 100 µg/Nm³. Ceci peut être accentué par le fait que l'adsorption du mercure se fait par physisorption quand la portion de mercure élémentaire est grande et que le réactif de démercurisation n'est pas imprégné chimiquement. En sus, dans le cas où une partie des solides collectés par le séparateur gaz-solide est recyclée dans les fumées à traiter et se retrouve ainsi en amont du séparateur gaz-solide, le mercure contenu dans cette partie des solides recyclée risque de repasser en phase gazeuse dans les fumées, en étalant ainsi la durée de relargage diffus du mercure dans les fumées circulant dans l'installation de traitement de fumées.

Dans tous les cas, ce relargage diffus du mercure, qui est ainsi étalé dans le temps, est non seulement difficilement détectable et quantifiable, mais peut aussi mettre en difficulté, d'une part, le système de contrôle des émissions en sortie de l'installation de traitement de fumées et, d'autre part, des unités aval de l'installation, comme une unité de dénitrification catalytique.

Le but de la présente invention est de proposer un procédé de démercurisation de fumées, qui soit amélioré pour tenir compte des pics de concentration en mercure dans les fumées.

A cet effet, l'invention a pour objet un procédé de démercurisation de fumées, tel que défini à la revendication 1.

Ainsi, une des idées à la base de l'invention est de piloter le dosage du réactif de démercurisation à partir de la concentration en mercure dans ces fumées en amont du point d'introduction du réactif dans les fumées à traiter. A chaque occurrence d'un pic de mercure, c'est-à-dire à chaque hausse soudaine et importante de la concentration du mercure dans les fumées entrant dans une installation mettant en oeuvre le procédé, il est alors possible de réagir très rapidement en augmentant le dosage du réactif de démercurisation. De plus, l'invention prévoit astucieusement d'éviter de réduire brutalement le dosage du réactif de démercurisation et, pour cela, tient compte de la quantité de mercure apportée par le pic de mercure, de façon à ralentir dans le temps la baisse du dosage du réactif de démercurisation une fois que le pic de mercure est passé. En particulier, lorsque la quantité de mercure apportée par le pic est modérée, ce qui est par exemple le cas avec un pic intense mais court, le dosage du réactif de démercurisation est ainsi commandé pour pouvoir revenir rapidement à une valeur « de base », directement liée au niveau ordinaire, c'est-à-dire hors pic de mercure, de la concentration du mercure en amont du point d'introduction du réactif de démercurisation dans les fumées à traiter. Dans ce premier cas, on contrôle efficacement les émissions de mercure dans les fumées en aval de l'installation de traitement de fumées, sans surconsommation du réactif de démercurisation. En revanche, lorsque la quantité de mercure apportée par le pic ou plusieurs pics rapprochés est forte, ce qui est par exemple le cas pour un pic important et long, le dosage du réactif de démercurisation est ainsi commandé pour rester à une valeur élevée pendant une période de temps plus longue que dans le premier cas. De cette façon, dans ce second cas, on contrôle efficacement les émissions de mercure dans les fumées en aval de l'installation de traitement de fumées, en neutralisant le relargage diffus du mercure, expliqué plus haut. Le procédé de démercurisation selon l'invention est ainsi particulièrement ingénieux, en contrôlant les émissions de mercure dans les fumées traitées, notamment de manière à maintenir ces émissions de mercure en dessous de seuils réglementaires même en cas de pics de mercure. Selon des spécificités et options de mise en oeuvre avantageuses, qui seront détaillées par la suite, l'efficacité et la praticité de ce procédé peuvent encore être renforcées.

Ainsi, des caractéristiques additionnelles avantageuses du procédé conforme à l'invention sont spécifiées aux autres revendications.

L'invention sera mieux comprise à la lecture de la description qui va suivre, donnée uniquement à titre d'exemple et faite en se référant aux dessins sur lesquels :
[fig. 1] la figure 1 est un schéma d'une installation de traitement de fumées, mettant en oeuvre un procédé de démercurisation conforme à l'invention ;
[fig. 2] la figure 2 est un graphique illustrant la concentration en mercure dans des fumées à traiter, en fonction du temps ;
[fig. 3] la figure 3 est une séquence de calculs, mise en oeuvre par le procédé conforme à l'invention ; et
[fig. 4] la figure 4 est un graphique illustrant la variation temporelle de trois variables différentes, détaillées par la suite.

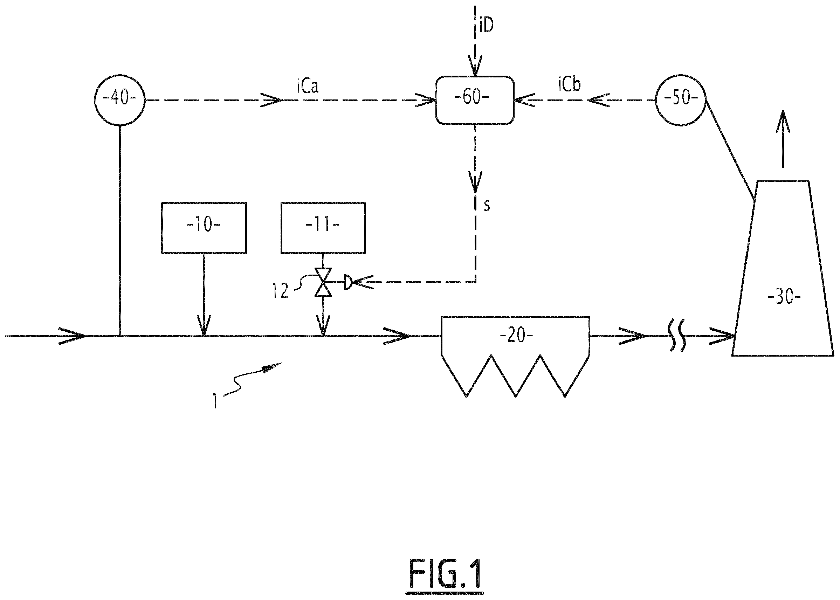

Sur la figure 1 est représentée une installation de traitement de fumées 1. Cette installation 1 est par exemple prévue en aval d'un incinérateur d'ordures ménagères, non représenté, dont les fumées de combustion sont envoyées en entrée de l'installation 1.

Les fumées envoyées à l'installation 1 contiennent du mercure, ainsi que, généralement, d'autres polluants tels que des gaz acides (HCl, SO₂), des oxydes d'azote, des poussières et des métaux lourds autres que le mercure. Le mercure contenu dans les fumées à traiter peut être présent sous diverses formes, à savoir élémentaire, oxydé et particulaire.

L'installation 1 comporte un séparateur gaz-solide 20 qui relève d'une technologie connue en soi. Ce séparateur gaz-solide 20 est par exemple un filtre à manches ou un électrofiltre. En pratique, le séparateur gaz-solide 20 opère typiquement à une température comprise entre 120°C et 250°C, c'est-à-dire que la température des fumées entrant dans le séparateur gaz-solide 20 est dans la plage précitée.

L'installation 1 comporte également un silo 10 contenant un réactif de neutralisation de gaz acides, tel que la chaux ou le bicarbonate de sodium. Ce réactif de neutralisation de gaz acides est introduit, depuis le silo 10, dans les fumées à traiter en amont du séparateur gaz-solide 20, afin de neutraliser les gaz acides présents dans les fumées à traiter. De manière connue en soi et non limitative de l'invention, le débit du réactif de neutralisation de gaz acides est régulé en fonction de la composition en polluants dans les fumées à traiter.

L'installation 1 comporte également un silo 11 contenant un réactif de démercurisation, tel que ceux listés dans la partie introductive du présent document. Ce réactif de démercurisation est introduit, depuis le silo 11, dans les fumées à traiter en amont du séparateur gaz-solide 20, afin de capter le mercure présent dans les fumées à traiter.

Le séparateur gaz-solide 20 est adapté pour séparer les poussières et réactifs solides, injectés dans les fumées à traiter depuis les silos 10 et 11, que les fumées contiennent lorsque ces dernières traversent le séparateur gaz-solide. Au moins une partie, voire la totalité, des solides collectés par le séparateur gaz-solide 20 est prévue pour être évacuée de l'installation 1, tandis que, le cas échéant, le reste de ces solides est recyclé, en étant envoyé dans les fumées à traiter en amont du séparateur gaz-solide 20.

L'installation 1 est optionnellement complétée par d'autres unités de traitement, placées en aval du séparateur gaz-solide 20, telles qu'une unité de dénitrification catalytique par exemple. De plus, d'autres équipements comme un ventilateur, un échangeur de chaleur, un réacteur ou un silo de stockage d'un autre réactif peuvent être présents au sein de l'installation 1. Dans tous les cas, les fumées traitées par l'installation 1 sont prévues pour sortir de cette dernière via une cheminée 30 par laquelle les fumées traitées sont rejetées dans l'environnement.

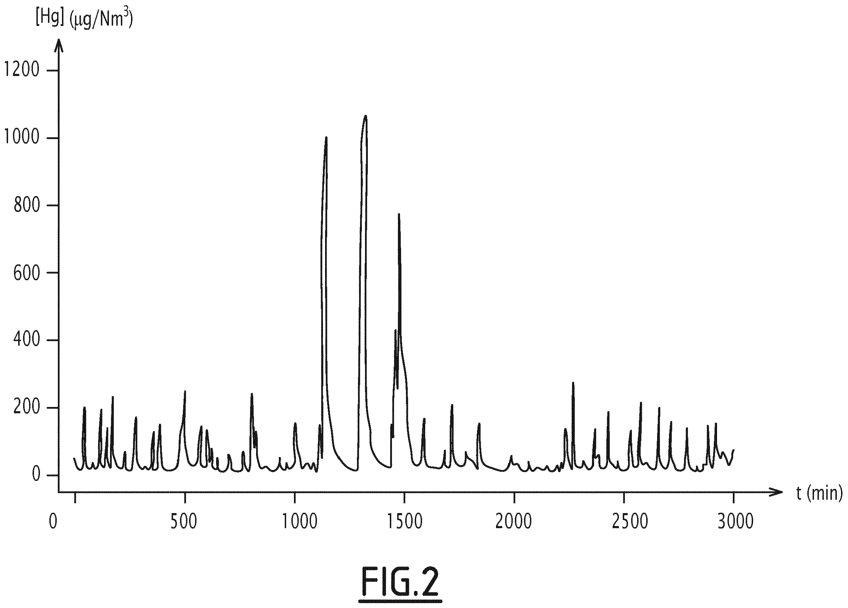

Avant de s'intéresser aux autres composants de l'installation 1, il est intéressant de comprendre comment peut évoluer dans le temps la concentration du mercure dans les fumées à traiter, c'est-à-dire les fumées entrant dans l'installation 1. Ainsi, la figure 2 illustre la concentration, en fonction du temps, en vapeur de mercure total (élémentaire et oxydé) dans des fumées qui sont issues d'un incinérateur d'ordures ménagères et qui sont susceptibles d'être envoyées à l'installation 1 aux fins de leur traitement, en particulier de leur démercurisation. Sur cet exemple réel illustré par la figure 2, on constate que la concentration de mercure est le plus souvent autour d'une valeur de l'ordre de 100 µg/Nm³ mais qu'elle connaît, à trois reprises, des pics de mercure lors desquels la concentration de mercure varie de manière rapide et avec une grande intensité, en atteignant plus de 800, voire 1000 µg/Nm³, en quelques secondes seulement. Les variations des autres polluants, tels que les gaz acides et les oxydes d'azote, ne présentent généralement pas de variations aussi brusques.

En revenant maintenant à la description de l'installation 1 de la figure 1, on va s'intéresser à la façon dont cette installation 1 est conçue pour réguler les émissions de mercure en sortie de l'installation 1, tout en tenant compte de l'évolution temporelle de la concentration en mercure dans les fumées à traiter entrant dans l'installation, y compris lorsque cette évolution temporelle inclut un ou plusieurs pics de mercure. A défaut d'une telle régulation, les concentrations en mercure dans les fumées traitées pourraient varier de plus de deux ordres de grandeur en quelques dizaines de secondes.

A cet effet, dans la forme de réalisation considérée sur la figure 1, l'installation 1 comporte deux analyseurs 40 et 50, ainsi qu'un calculateur 60.

L'analyseur 40 est adapté pour, en temps réel, déterminer la concentration du mercure dans les fumées en amont du point d'introduction du réactif de démercurisation dans ces fumées, ainsi que transmettre un signal d'information iCa représentatif de la valeur de cette concentration, cette valeur de concentration étant appelée Ca par la suite. Il n'est pas nécessaire que le signal d'information iCa émis par l'analyseur 40 soit strictement continu, dans le sens où les valeurs de concentration Ca déterminées par l'analyseur 40 sont à fournir, via le signal d'information iCa, à chaque instant, c'est-à-dire à chaque répétition d'une fréquence temporelle prédéterminée, valant de préférence entre trente secondes et soixante secondes.

En pratique, l'analyseur 40 est sensible à une ou plusieurs formes de mercure présent dans les fumées à traiter, de sorte que le signal d'information iCa donne une information sur la concentration en mercure total ou en une forme du mercure, contenu dans les fumées à traiter. Il n'est ainsi pas indispensable d'avoir une connaissance de la spéciation du mercure en amont du point d'introduction du réactif de démercurisation dans les fumées à traiter, car le signal d'information iCa est prévu, comme expliqué par la suite, pour être utilisé pour suivre l'évolution temporelle de la concentration en mercure dans les fumées à traiter, étant remarqué que les différentes formes du mercure connaissent généralement la même évolution temporelle de leur concentration.

L'analyseur 50 est adapté pour, en temps réel, déterminer la concentration du mercure dans les fumées en aval du séparateur gaz-solide 20, ainsi que transmettre un signal d'information iCb représentatif de la valeur de cette concentration, cette valeur de concentration étant appelée Cb par la suite. Cet analyseur 50 est de préférence placé dans la cheminée 30. Similairement à l'analyseur 40, il n'est pas nécessaire que le signal d'information iCb émis par l'analyseur 50 soit un signal strictement continu, dans le sens où les valeurs de concentration Cb déterminées par l'analyseur 50 sont à fournir, via le signal d'information iCb, à chaque instant, c'est-à-dire à chaque répétition d'une fréquence temporelle prédéterminée, valant de préférence trois minutes environ. En pratique, la fréquence de rafraichissement de l'analyseur 50 pour la détermination de la valeur de concentration Cb et pour la transmission du signal d'information correspondant iCb est moindre que celle de l'analyseur 40 car, comme expliqué plus en détail par la suite, le signal d'information iCb émis par l'analyseur 50 est prévu pour opérer une rétroaction de correction, couramment appelée « feedback », pour le contrôle des émissions de mercure dans les fumées sortant de l'installation 1.

Les analyseurs 40 et 50 relèvent d'une technologie connue en soi, qui n'est pas limitative de l'invention.

Le calculateur 60 est, quant à lui, adapté pour commander en temps réel le dosage du réactif de démercurisation introduit, depuis le silo 11, dans les fumées en amont du point d'introduction de ce réactif de démercurisation dans les fumées à traiter. A cet effet, le calculateur 60 est conçu pour exécuter en permanence, c'est-à-dire de façon répétée selon une fréquence temporelle prédéterminée, une séquence de calculs, qui sera détaillée plus loin. De plus, le calculateur 60 est relié aux analyseurs 40 et 50 par toute liaison permettant de transmettre les signaux d'information iCa et iCb depuis les analyseurs 40 et 50 jusqu'au calculateur 60. Le calculateur 60 est également relié à un organe 12 de dosage du flux du réactif de démercurisation sortant du silo 11, cet organe de dosage 12 étant par exemple une électrovanne. Là encore, la forme de réalisation de la liaison entre le calculateur 60 et l'organe de dosage 12 est indifférente du moment qu'elle permet de transmettre, depuis le calculateur 60 jusqu'à l'organe de dosage 12, un signal de commande s qui est représentatif du résultat de la séquence de calculs exécutée par le calculateur 60. Par ailleurs, le calculateur 60 est aussi relié à un autre appareil, non représenté sur les figures, fournissant en temps réel un signal d'information iD qui est envoyé au calculateur 60 et qui est représentatif de la valeur du débit des fumées à traiter, cette valeur de débit étant appelée D par la suite. Ce signal d'information iD provient par exemple d'un appareil de mesure de débit de fumées, placé en amont du séparateur gaz-solide 20, ou bien d'un appareil de mesure de débit de fumées placé à la cheminée 30 ou bien encore d'un appareil de mesure de production de vapeur, voire d'un système d'évaluation indirecte de la production de vapeur puisque celle-ci est directement corrélée à la quantité de fumées traitée par l'installation 1. Plus généralement, le signal d'information iD fournit des données au calculateur 60 permettant à ce dernier de déterminer, notamment de calculer, à chaque instant la valeur de débit D représentative du débit des fumées à traiter.

La forme de réalisation du calculateur 60 n'est pas limitative du moment que ce calculateur 60 est apte, en temps réel, à traiter, notamment numériquement, les signaux d'information iCa, iCb et iD en appliquant la séquence de calculs précitée, ainsi qu'à émettre le signal de commande s. Ainsi, le calculateur 60 peut être une unité de calcul autonome, notamment sous la forme d'un automate programmable, ou appartenir à un système de supervision, notamment un système informatique.

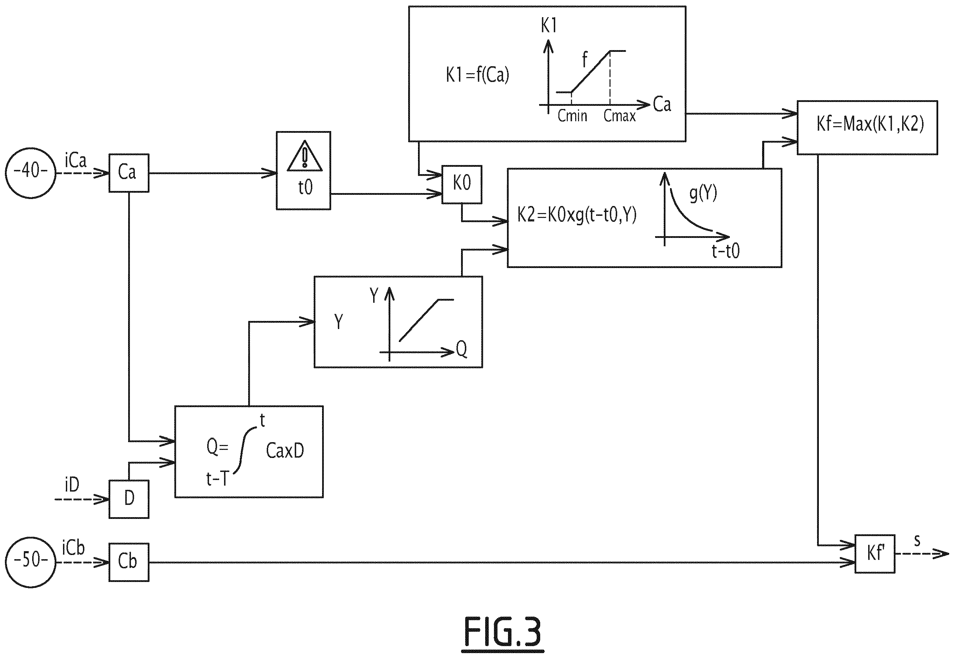

On va maintenant décrire en détail un procédé mis en oeuvre par l'installation 1, par lequel les fumées à traiter entrant dans cette installation sont épurées, en particulier démercurisées. Au passage, on va détailler un exemple correspondant de la séquence de calculs, exécutée par le calculateur 60, cette séquence de calculs étant illustrée à la figure 3.

On considère que l'installation 1 est en régime établi et que, après que le réactif de neutralisation de gaz acides et le réactif de démercurisation aient été introduits dans les fumées à traiter en amont du séparateur gaz-solide 20 depuis respectivement le silo 10 et le silo 11, les fumées à traiter sont envoyées au séparateur gaz-solide 20. La séparation opérée par ce dernier conduit à la formation d'un gâteau de filtration dans le séparateur gaz-solide 20, accroché par exemple aux manches de filtrage de ce séparateur. A chaque instant de ce régime établi, c'est-à-dire à chaque répétition d'une fréquence temporelle prédéterminée, valant par exemple entre 30 secondes et 2 minutes et correspondant ici à la fréquence d'exécution de la séquence de calculs par le calculateur 60, le réactif de démercurisation est dosé en mettant en oeuvre les opérations suivantes.

Par une opération a), on détermine à chaque instant une valeur de concentration amont Ca pour la concentration du mercure dans les fumées en amont du point d'introduction du réactif de démercurisation dans les fumées. Ici, cette détermination de la valeur de concentration amont Ca est opérée, notamment par mesure directe, par l'analyseur 40 et cette valeur de concentration amont Ca est fournie au calculateur 60 via le signal d'information iCa.

Egalement par l'opération a), on détermine à chaque instant une valeur de débit D représentative du débit des fumées à traiter. Ici, cette détermination de la valeur de débit D est opérée, notamment par calcul, par le calculateur 60 à partir du signal d'information iD.

Par une opération b), on calcule à chaque instant, ici par le calculateur 60, un facteur de dosage, appelé K1, à partir de (i) la valeur de concentration amont Ca, fournie ici au calculateur 60 par le signal d'information iCa, et (ii) une fonction f, qui est préétablie, en étant ici préenregistrée dans le calculateur 60, et qui est croissante en fonction de la valeur de concentration amont Ca. Le facteur de dosage K1 permet de commander un dosage spécifique du réactif de démercurisation et est exprimé par exemple en grammes par normal m³ de fumées. En multipliant le facteur de dosage K1 par la valeur de débit D, on peut calculer un débit pour le réactif de démercurisation à introduire dans les fumées à traiter. Comme la fonction f est croissante en fonction de la valeur de concentration amont Ca, on comprend que le facteur de dosage K1 est calculé à une valeur basse lorsque les fumées à traiter contiennent peu de mercure et est calculé à une valeur haute lorsque les fumées à traiter contiennent beaucoup de mercure.

La forme de la fonction f n'est pas limitative de l'invention. Ceci étant, il est préféré que la fonction f soit strictement croissante entre une grandeur minimale Cmin et une grandeur maximale Cmax de la valeur de concentration amont Ca, tout en étant constante en deçà de la grandeur minimale Cmin et également constante au-delà de la grandeur maximale Cmax. Cette forme préférée de la fonction f est illustrée schématiquement sur la figure 3. A titre d'alternatives également intéressantes, la fonction f est :
- strictement croissante entre une valeur nulle de la valeur de concentration amont Ca et une grandeur maximale de la valeur de concentration amont Ca, en étant constante au-delà de cette grandeur maximale, ou bien
- en escalier, c'est-à-dire constante sur des intervalles successifs de la valeur de concentration amont Ca.

On notera que si le procédé de démercurisation se limitait aux opérations a) et b) décrites jusqu'ici, il serait possible de doser le réactif de démercurisation en tenant compte de la concentration du mercure dans les fumées à traiter, mais ce dosage serait mis en difficulté lors de l'occurrence d'un pic de mercure, en raison du relargage différé du mercure, expliqué dans la partie introductive du présent document. En particulier, à l'issue de chaque pic de mercure, la fonction f risquerait de commander une décroissance trop rapide et/ou prématurée du dosage du réactif de démercurisation. Les autres opérations du procédé de démercurisation vont permettre de surmonter cette difficulté, comme expliqué ci-dessous.

Par une opération c), on calcule à chaque instant, ici par le calculateur 60, une quantité de mercure Q en sommant, sur une période de temps prédéterminée T se finissant à l'instant considéré t, le produit de la valeur de concentration amont Ca avec la valeur de débit D. En pratique, le calculateur 60 calcule à cet effet, en permanence, l'intégrale, sur la période de temps T qui précède l'instant considéré t, le flux de mercure des fumées à traiter, ce flux de mercure étant calculé en multipliant la valeur de concentration amont Ca et la valeur de débit D. Cette quantité de mercure Q s'exprime en unité massique ou molaire et représente le mercure que les fumées à traiter ont fait entrer dans l'installation 1 au cours de la période de temps T qui précède l'instant considéré. On comprend que cette quantité de mercure Q sert à estimer le degré de contamination du séparateur gaz-solide et des autres équipements de l'installation 1, situés en aval du séparateur gaz-solide 20. La période de temps T est prédéterminée, en étant ici préenregistrée dans le calculateur 60, et présente une valeur comprise par exemple entre 15 minutes et 120 minutes.

Par une opération d), on surveille l'occurrence d'un pic de mercure à partir de la valeur de concentration amont Ca. La détection de chaque pic de mercure est ici réalisée par le calculateur 60, en utilisant un traitement ad hoc, connu en soi, appliqué à la valeur de concentration amont Ca. A titre d'exemple pratique et fiable, un filtre de Savitzky-Golay est appliqué sur les N valeurs de concentration amont Ca déterminées juste avant l'instant considéré, N étant supérieur ou égal 6. En variante, le filtre de Savitzky-Golay est appliqué sur les N valeurs de concentration amont Ca déterminées juste avant l'instant considéré, N étant supérieur ou égal 3. On peut envisager d'autres algorithmes de surveillance appliqués sur les N valeurs de concentration amont Ca déterminées juste avant l'instant considéré, N étant supérieur ou égal 3 : à titre d'exemples non limitatifs, l'algorithme de surveillance utilisé repose sur la moyenne mobile arithmétique, la moyenne mobile pondérée ou bien la moyenne mobile exponentielle, calculée pour les N valeurs précitées.

Egalement par l'opération d), il est prévu que, à chaque fois qu'un pic de mercure se produit, on enregistre l'instant dit t0 où le pic se produit, ainsi que la valeur dite K0 du facteur de dosage K1 à l'instant t0. Ici, à chaque fois qu'un pic de mercure est détecté par le calculateur 60, ce dernier mémorise l'instant t0 et la valeur K0 calculée pour le facteur de dosage K1. De plus, à chaque instant qui suit l'instant t0, on calcule, ici par le calculateur 60, un facteur de dosage, qui est appelé K2 et qui est différent du facteur de dosage K1, à partir de la valeur K0 et d'une fonction g, qui est différente de la fonction f et qui est préétablie, en étant ici préenregistrée dans le calculateur 60. La fonction g est décroissante avec le temps et est prévue de sorte que sa décroissance dans le temps est d'autant plus lente que la quantité de mercure Q calculée à l'instant considéré est importante. En pratique, et comme illustré schématiquement sur la figure 3, le facteur de dosage K2 peut être obtenu en multipliant la valeur K0 par le résultat de la fonction g à l'instant considéré. De manière similaire au facteur de dosage K1, le facteur de dosage K2 permet de commander un dosage spécifique du réactif de neutralisation et s'exprime ainsi par exemple en kilogrammes par normal m³ de fumées. A la différence du facteur de dosage K1, la décroissance du dosage du réactif de démercurisation suite à un pic de mercure est commandée par le facteur de dosage K2 de façon à être lente.

La forme de la fonction g n'est pas limitative de l'invention. Ceci étant, selon une mise en oeuvre particulière illustrée schématiquement à la figure 3, la fonction g est de la forme exp(-(t-t0)/Y) où t est l'instant considéré et Y est égal à la quantité de mercure Q calculée à l'instant considéré, multipliée par une constante de proportionnalité qui peut par exemple être choisie par un opérateur pilotant le procédé, selon notamment les spécificités des fumées à traiter ou les performances d'épuration souhaitées. Autrement dit, à chaque instant, Y est proportionnel à la quantité de mercure Q calculée par l'opération c), comme illustré schématiquement par la figure 3, Y étant ici calculé par le calculateur 60. A titre d'alternatives également intéressantes, la fonction g est :
- de la forme 1 -((t-t0)/Y), ou bien
- de la forme 1/(cosh((t-tO)/Y), où cosh est la fonction cosinus hyperbolique.

La forme spécifique pour la fonction g, c'est-à-dire décroissante dans le temps et avec sa décroissance dans le temps qui est d'autant plus lente que la quantité de mercure Q calculée à l'instant considéré est importante, permet à la fois de réguler efficacement n'importe quelle grandeur de la valeur de concentration amont Ca lors d'un pic de mercure, mais aussi d'optimiser la consommation en réactif de démercurisation. Pour bien comprendre cet aspect, ce dernier peut être illustré par deux cas distincts. Dans un premier cas, le pic de mercure est intense mais court, ce qui signifie que la quantité de mercure Q apportée par les fumées à traiter reste faible même si la concentration en mercure dans ces fumées est forte pendant un court instant. Par l'opération b), le facteur de dosage K1 est porté à une valeur haute et commande un fort dosage pour le réactif de démercurisation. Une fois que le pic de mercure est passé, il n'est pas nécessaire que le dosage du réactif de démercurisation décroisse lentement et ce dosage peut donc rester piloté par le facteur de dosage K1, ce dernier revenant rapidement à une valeur ordinaire basse. Dans ce premier cas, il est donc plus avantageux d'avoir le facteur de dosage K2 qui décroit rapidement, par exemple exponentiellement, en lien avec une faible valeur de Y. Dans un second cas, le pic de mercure est intense mais plus long que dans le premier cas, ou bien plusieurs pics de mercure se succèdent de manière rapprochée. La quantité de mercure Q et, par-là, Y présentent alors des valeurs élevées et une quantité significative de mercure entre dans l'installation 1. Une fois que le pic de mercure est passé, un relargage diffus du mercure dans l'installation 1 se produit, comme expliqué dans la partie introductive du présent document. Pour remédier à ce relargage diffus du mercure, le dosage du réactif de démercurisation reste maintenu à une valeur élevée pendant une durée beaucoup plus longue que dans le premier cas, grâce à la fonction g qui fait décroître le facteur de dosage K2 pendant une période longue et avec une pente faible puisque Y a une valeur plus élevée que dans le premier cas.

Par une opération e), il est prévu, à chaque instant, de comparer, ici par le calculateur 60, la valeur calculée pour le facteur de dosage K1 et la valeur calculée du facteur de dosage K2, en retenant la plus grande de ces deux valeurs calculées, appelée Kf. Autrement dit, la valeur retenue Kf est égale à la plus grande des valeurs calculées respective des facteurs de dosage K1 et K2. Cette valeur retenue Kf est utilisée pour doser le réactif de démercurisation. Ici, le calculateur 60 génère le signal de commande s à partir de la valeur retenue Kf.

Par une opération f) optionnelle mais avantageuse, on détermine à chaque instant une valeur de concentration aval Cb pour la concentration du mercure en aval du séparateur gaz-solide 20, cette détermination de la valeur de concentration aval Cb étant ici opérée, par mesure directe, par l'analyseur 50 et étant fournie au calculateur 60 via le signal d'information iCb. De plus, la valeur retenue Kf est, avant d'être utilisée pour doser le réactif de démercurisation, corrigée, en tant que valeur ajustée Kf', à partir de la valeur de concentration aval Cb. Ici, le calculateur 60 génère le signal de commande s à partir de la valeur ajustée Kf', comme indiqué schématiquement sur la figure 3.

Ainsi, l'opération optionnelle f) permet d'appliquer une rétroaction d'ajustement sur la valeur retenue Kf issue de l'opération e). La correction appliquée par l'opération f) est connue en soi et peut notamment être mise en oeuvre par un algorithme PID (acronyme de « proportionnel, intégral, dérivé »), ici exécutée par le calculateur 60.

A titre de compléments optionnels au procédé de démercurisation qui vient d'être détaillé, il est prévu de tirer profit de la détection de chaque pic de mercure pour agir sur le gâteau de filtration présent dans le séparateur gaz-solide 20. En effet, comme expliqué dans la partie introductive du présent document, une partie du mercure apportée par chaque pic de mercure est collectée et s'accumule dans le gâteau de filtration, avec un risque de relargage différé de ce mercure.

Ainsi, un premier complément du procédé de démercurisation consiste à éliminer le gâteau de filtration au plus vite après chaque pic de mercure. Pour ce faire, il est avantageusement prévu que, après une durée prédéterminée, valant par exemple entre 1 et 15 minutes, à partir de l'instant t0, on force l'application d'une séquence de décolmatage au séparateur gaz-solide 20 de manière à éliminer le gâteau de filtration. Une telle séquence de décolmatage est connue en soi et consiste notamment à agir de manière mécanique et/ou pneumatique sur le gâteau de filtration pour le désolidariser de l'organe du séparateur gaz-solide 20 sur lequel il se forme, par exemple pour le détacher de manches de ce séparateur.

Un second complément du procédé de démercurisation consiste à chercher à éviter que le mercure présent dans le gâteau de filtration ne soit relâché par ce dernier du fait d'un excès de la concentration des gaz acides dans les fumées traversant le séparateur gaz-solide 20. Pour ce faire, il est avantageusement prévu que, pendant une durée prédéterminée, valant par exemple entre 1 et 15 minutes, à partir de l'instant t0, on surdose le réactif de neutralisation de gaz acides introduit dans les fumées à traiter depuis le silo 10.

### Exemple :

Selon un exemple opératoire, l'installation 1 est utilisée dans les conditions suivantes :
- le débit des fumées à traiter est égal à environ 150 000 Nm³/h ;
- la fonction f est telle que :
   - si la valeur de concentration amont Ca est inférieure à 40 µg/Nm³, K1 est retourné par la fonction f en étant constant et égal à 80 mg/Nm³,
   - si la valeur de concentration amont Ca est comprise entre 40 et 1000 µg/Nm³, K1 est retourné par la fonction f comme étant le résultat, exprimé en mg/Nm³, de la formule 80+720x(Ca-40)/960, et
   - si la valeur de concentration amont Ca est supérieure à 1000 µg/Nm³, K1 est retourné par la fonction f comme étant constant et égal à 800 mg/Nm³ ;
- la période de temps T est égale à 30 minutes ; et
- la fonction g est exp(-(t-t0)/Y) avec Y qui est pris proportionnel à la quantité de mercure Q.

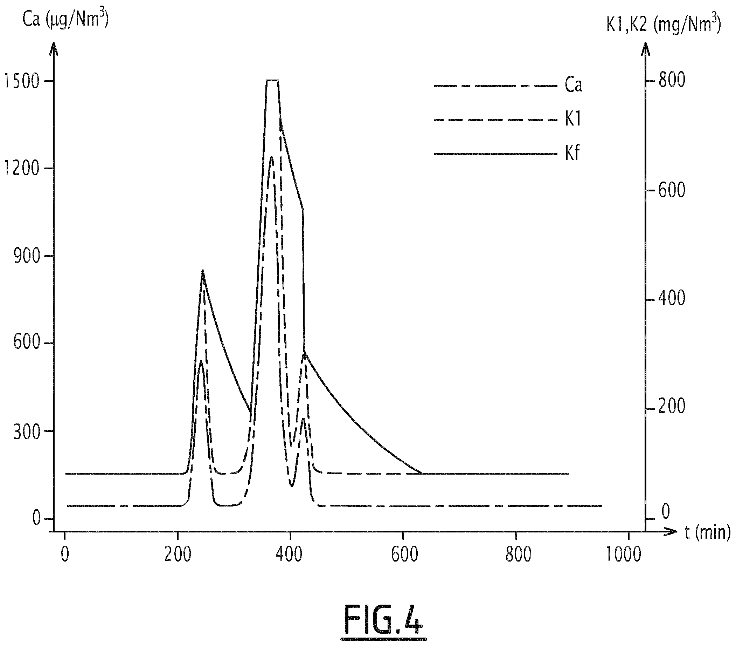

La figure 4 illustre l'exemple opératoire avec l'occurrence de trois pics de mercure.

La courbe en traits mixtes sur la figure 4, qui est associée à l'échelle de gauche, est l'évolution temporelle de la valeur de concentration amont Ca, autrement dit l'évolution temporelle de la concentration de mercure dans les fumées à traiter, déterminée par l'analyseur 40. Cette courbe en traits mixtes fait apparaître les trois pics de mercure, respectivement au temps t=240 minutes, t=360 minutes et t=420 minutes. Le pic de mercure le plus intense est associé à une valeur de 1240 µg/Nm³ pour la valeur de concentration amont Ca.

La courbe en pointillés et la courbe en traits pleins, qui sont toutes les deux associées à l'échelle de droite sur la figure 4, montrent l'évolution temporelle de, respectivement, le facteur de dosage K1 et la valeur retenue Kf. La comparaison entre la courbe en traits mixtes et la courbe en traits pleins permet de constater que, lors de chacun des pics de mercure, la valeur retenue Kf est ralentie dans le temps par rapport au facteur de dosage K1. En particulier, lors de l'apparition des premier et deuxième pics de mercure, la valeur retenue Kf est pilotée par le facteur de dosage K1, tandis que, une fois que chaque pic de mercure atteint son apogée, ainsi qu'après chacun de ces pics de mercure, la valeur retenue Kf est pilotée par le facteur de dosage K2, en ralentissant sa décroissance temporelle comparativement au facteur de dosage K1. Avant le premier pic de mercure, ainsi qu'après environ 200 minutes à partir du troisième pic de mercure, la valeur retenue Kf est pilotée par le facteur de dosage K1, en commandant un dosage minimal pour le réactif de démercurisation.

## Revendications

1. Procédé de démercurisation de fumées,
dans lequel des fumées à traiter sont envoyées à un séparateur gaz-solide (20),
dans lequel un réactif de démercurisation est introduit dans les fumées à traiter en amont du séparateur gaz-solide,
et dans lequel le réactif de démercurisation est dosé en mettant en oeuvre à chaque instant les opérations suivantes :
a) on détermine :
- une valeur de concentration amont (Ca) pour la concentration de mercure dans les fumées en amont du point d'introduction du réactif de démercurisation dans les fumées à traiter, et
- une valeur de débit (D) représentative du débit des fumées à traiter,
b) on calcule un premier facteur de dosage (K1) à partir de la valeur de concentration amont (Ca) et d'une première fonction (f) qui est croissante en fonction de la valeur de concentration amont,
c) on calcule une quantité de mercure (Q) en sommant, sur une période de temps prédéterminée (T) se finissant à l'instant considéré, le produit de la valeur de concentration amont (Ca) avec la valeur de débit (D),
d) à partir de la valeur de concentration amont (Ca), on surveille l'occurrence d'un pic de mercure et, à chaque fois qu'un pic de mercure se produit :
- on enregistre l'instant dit t0 où le pic se produit, ainsi que la valeur dite K0 du premier facteur de dosage (K1) à l'instant t0, et
- à chaque instant qui suit l'instant t0, on calcule un second facteur de dosage (K2) à partir de la valeur K0 et d'une seconde fonction (g) qui est décroissante avec le temps et dont la décroissance dans le temps est d'autant plus lente que la quantité de mercure (Q) calculée à l'instant considéré est importante, et
e) on compare la valeur calculée du premier facteur de dosage (K1) et la valeur calculée du second facteur de dosage (K2) et on utilise la plus grande (Kf) de ces deux valeurs calculées pour doser le réactif de démercurisation.

2. Procédé suivant la revendication 1, dans lequel la seconde fonction (g) est de la forme exp(-(t-t0)/Y) où t est l'instant considéré et Y est égal à la quantité de mercure (Q) calculée à l'instant considéré, multipliée par une constante de proportionnalité.

3. Procédé suivant la revendication 1, dans lequel la seconde fonction (g) est de la forme 1-((t-t0)/Y) où t est l'instant considéré et Y est égal à la quantité de mercure (Q) calculée à l'instant considéré, multipliée par une constante de proportionnalité.

4. Procédé suivant la revendication 1, dans lequel la seconde fonction (g) est de la forme 1/(cosh((t-t0)/Y) où t est l'instant considéré et Y est égal à la quantité de mercure (Q) calculée à l'instant considéré, multipliée par une constante de proportionnalité.

5. Procédé suivant l'une quelconque des revendications précédentes, dans lequel la première fonction (f) est strictement croissante entre une grandeur minimale (Cmin) et une grandeur maximale (Cmax) de la valeur de concentration amont (Ca), et est constante à la fois en-deçà de ladite grandeur minimale et au-delà de ladite grandeur maximale.

6. Procédé suivant l'une quelconque des revendications 1 à 4, dans lequel la première fonction (f) est strictement croissante entre une valeur nulle de la valeur de concentration amont (Ca) et une grandeur maximale de la valeur de concentration amont (Ca), et est constante au-delà de ladite grandeur maximale.

7. Procédé suivant l'une quelconque des revendications 1 à 4, dans lequel la première fonction (f) est en escalier.

8. Procédé suivant l'une quelconque des revendications précédentes, dans lequel l'occurrence d'un pic de mesure est surveillée en appliquant, à chaque instant, un algorithme de surveillance sur les N valeurs de concentration amont (Ca) déterminées juste avant l'instant considéré, N étant supérieur ou égal 3.

9. Procédé suivant la revendication 8, dans lequel l'algorithme de surveillance est un filtre de Savitzky-Golay.

10. Procédé suivant la revendication 9, dans lequel le filtre de Savitzky-Golay est appliqué sur les N valeurs de concentration amont (Ca) déterminées juste avant l'instant considéré, N étant supérieur ou égal 6.

11. Procédé suivant l'une quelconque des revendications précédentes, dans lequel, à chaque instant, on détermine également une valeur de concentration aval (Cb) pour la concentration du mercure en aval du séparateur gaz-solide (20), et dans lequel on corrige, à partir de la valeur de concentration aval (Cb), la plus grande (Kf) des deux valeurs calculées des premier et second facteurs de dosage (K1, K2) avant d'utiliser celle-ci pour doser le réactif de démercurisation.

12. Procédé suivant la revendication 11, dans lequel on corrige la plus grande (Kf) des deux valeurs calculées des premier et second facteurs de dosage (K1, K2) en utilisant un algorithme PID.

13. Procédé suivant l'une quelconque des revendications précédentes, dans lequel la période de temps prédéterminée (T) vaut entre 15 et 120 minutes.

14. Procédé suivant l'une quelconque des revendications précédentes, dans lequel, après une durée prédéterminée, valant par exemple entre 1 et 15 minutes, à partir de l'instant t0, un gâteau de filtration du séparateur gaz-solide (20) est éliminé en appliquant au séparateur gaz-solide une séquence de décolmatage forcée.

15. Procédé suivant l'une quelconque des revendications précédentes, dans lequel, pendant une durée prédéterminée, valant par exemple entre 1 et 15 minutes, à partir de l'instant t0, un réactif de neutralisation de gaz acides introduit dans les fumées à traiter en amont du séparateur gaz-solide (20) est surdosé.

## Patentansprüche

1. Quecksilberentfernungsverfahren aus Rauchgasen,
wobei zu behandelnde Rauchgase zu einem Gas-Feststoff-Abscheider (20) geleitet werden, wobei ein Quecksilberentfernungsreagenz in die zu behandelnden Rauchgase stromaufwärts von dem Gas-Feststoff-Abscheiders eingeleitet wird,
und wobei das Quecksilberentfernungsreagenz dosiert wird, indem zu jedem Zeitpunkt die folgenden Vorgänge durchgeführt werden:
a) Bestimmen:
- eines stromaufwärtigen Konzentrationswerts (Ca) für die Quecksilberkonzentration in den Rauchgasen stromaufwärts von dem Punkt, an dem das Quecksilberentfernungsreagenz in die zu behandelnden Rauchgase eingeleitet wird, und
- eines Durchflusswerts (D), der repräsentativ für den Durchfluss der zu behandelnden Rauchgase ist,
b) Berechnen eines ersten Dosierungsfaktors (K1) anhand des stromaufwärtigen Konzentrationswerts (Ca) und einer ersten Funktion (f), die abhängig von dem stromaufwärtigen Konzentrationswert ansteigend ist,
c) Berechnen einer Quecksilbermenge (Q), indem über einen vorbestimmten Zeitraum (T), der an dem betrachteten Zeitpunkt endet, das Produkt aus dem stromaufwärtigen Konzentrationswert (Ca) und dem Durchflussmengenwerts (D) summiert wird,
d) anhand des stromaufwärtigen Konzentrationswerts (Ca), Überwachen des Auftretens eines Quecksilberspitzenwerts und jedes Mal, wenn ein Quecksilberspitzenwert vorkommt:
- Registrieren des als t0 bezeichneten Zeitpunkts, an dem die Spitze vorkommt, sowie des als K0 bezeichneten Werts des ersten Dosierungsfaktors (K1) an dem Zeitpunkt t0, und
- zu jedem Zeitpunkt nach dem Zeitpunkt t0, Berechnen eines zweiten Dosierungsfaktors (K2) anhand des Werts K0 und einer zweiten Funktion (g), die mit der Zeit abnimmt und deren zeitlicher Abfall umso langsamer ist, je größer die für den jeweiligen Zeitpunkt berechnete Quecksilbermenge (Q) ist, und
e) Vergleichen des berechneten Werts des ersten Dosierungsfaktors (K1) und des berechnete Werts des zweiten Dosierungsfaktors (K2) und Verwenden des größeren (Kf) dieser zwei berechneten Werte, um das Quecksilberentfernungsreagenz zu dosieren.

2. Verfahren nach Anspruch 1, wobei die zweite Funktion (g) von der Form exp(-(t-t0)/Y) ist, wobei t der betrachtete Zeitpunkt ist und Y gleich wie die zu diesem Zeitpunkt berechnete Quecksilbermenge (Q) ist, multipliziert mit einer Proportionalitätskonstante.

3. Verfahren nach Anspruch 1, wobei die zweite Funktion (g) von der Form 1-((t-t0)/Y) ist, wobei t der betrachtete Zeitpunkt ist und Y gleich wie die zu diesem Zeitpunkt berechnete Quecksilbermenge (Q) ist, multipliziert mit einer Proportionalitätskonstante.

4. Verfahren nach Anspruch 1, wobei die zweite Funktion (g) die Form 1/(cosh((t-t0)/Y) hat, wobei t der betrachtete Zeitpunkt ist und Y gleich wie die zu diesem Zeitpunkt berechnete Quecksilbermenge (Q) ist, multipliziert mit einer Proportionalitätskonstante.

5. Verfahren nach einem der vorherigen Ansprüche, wobei die erste Funktion (f) zwischen einer minimalen Größe (Cmin) und einer maximalen Größe (Cmax) des Werts der stromaufwärtigen Konzentration (Ca) streng ansteigt und sowohl unterhalb der minimalen Größe als auch oberhalb der maximalen Größe konstant ist.

6. Verfahren nach einem der Ansprüche 1 bis 4, wobei die erste Funktion (f) zwischen einem Nullwert des stromaufwärtigen Konzentrationswerts (Ca) und einer maximalen Größe des stromaufwärtigen Konzentrationswerts (Ca) streng ansteigt und über die maximale Größe hinaus konstant ist.

7. Verfahren nach einem der Ansprüche 1 bis 4, wobei die erste Funktion (f) treppenförmig ist.

8. Verfahren nach einem der vorherigen Ansprüche, wobei das Auftreten einer Messspitze überwacht wird, indem zu jedem Zeitpunkt ein Überwachungsalgorithmus auf die N stromaufwärtigen Konzentrationswerte (Ca) angewendet wird, die unmittelbar vor dem jeweiligen Zeitpunkt bestimmt werden, wobei N größer als oder gleich wie 3 ist.

9. Verfahren nach Anspruch 8, wobei der Überwachungsalgorithmus ein Savitzky-Golay-Filter ist.

10. Verfahren nach Anspruch 9, wobei der Savitzky-Golay-Filter auf die N stromaufwärtigen Konzentrationswerte (Ca) angewendet wird, die unmittelbar vor dem betrachteten Zeitpunkt bestimmt werden, wobei N größer als oder gleich wie 6 ist.

11. Verfahren nach einem der vorherigen Ansprüche, wobei zu jedem Zeitpunkt auch ein stromabwärtiger Konzentrationswert (Cb) für die Quecksilberkonzentration stromabwärts von dem Gas-Feststoff-Abscheider (20) bestimmt wird, und wobei anhand des stromabwärtigen Konzentrationswerts (Cb) der größere (Kf) der zwei berechneten Werte des ersten und des zweiten Dosierungsfaktors (K1, K2) korrigiert wird, bevor dieser zum Dosieren des Quecksilberentfernungsreagenzes verwendet wird.

12. Verfahren nach Anspruch 11, wobei der größere (Kf) der zwei berechneten Werte des ersten und des zweiten Dosierungsfaktors (K1, K2) unter Verwendung eines PID-Algorithmus korrigiert wird.

13. Verfahren nach einem der vorherigen Ansprüche, wobei die vorbestimmte Zeitperiode (T) zwischen 15 und 120 Minuten beträgt.

14. Verfahren nach einem der vorherigen Ansprüche, wobei nach einer vorbestimmten Dauer, die beispielsweise zwischen 1 und 15 Minuten beträgt, ab dem Zeitpunkt t0 ein Filterkuchen aus dem Gas-Feststoff-Abscheider (20) entfernt wird, indem auf den Gas-Feststoff-Abscheider eine erzwungene Verstopfungsentfernungssequenz angewendet wird.

15. Verfahren nach einem der vorherigen Ansprüche, wobei über eine vorbestimmte Dauer, die beispielsweise zwischen 1 und 15 Minuten beträgt, ab dem Zeitpunkt t0 ein Reagenz zur Neutralisierung von sauren Gasen, das in die zu behandelnden Rauchgase vor dem Gas-Feststoff-Abscheider (20) eingeführt wird, überdosiert wird.

## Claims

1. Process for the demercurisation of flue gases,
in which fumes to be treated are sent to a gas-solid separator (20), in which a demercurisation reagent is introduced into the fumes to be treated upstream of the gas-solid separator,
and in which the demercurisation reagent is dosed by carrying out the following operations at each instant:
a) we determine:
- an upstream concentration value (Ca) for the mercury concentration in the fumes upstream of the point of introduction of the demercurisation reagent into the fumes to be treated, and
- a flow rate value (D) representative of the flow rate of the flue gases to be treated,
b) a first dosing factor (K1) is calculated from the upstream concentration value (Ca) and a first function (f) which increases as a function of the upstream concentration value,
c) a quantity of mercury (Q) is calculated by summing, over a predetermined period of time (T) ending at the instant in question, the product of the upstream concentration value (Ca) and the flow rate value (D),
d) from the upstream concentration value (Ca), the occurrence of a mercury peak is monitored and, each time a mercury peak occurs:
- the time t0 at which the peak occurs is recorded, together with the value K0 of the first dosing factor (K1) at time t0, and
- at each instant following the instant t0, a second dosing factor (K2) is calculated from the value K0 and a second function (g) which decreases with time and whose decrease with time is all the slower as the quantity of mercury (Q) calculated at the instant in question is greater, and
e) the calculated value of the first dosing factor (K1) is compared with the calculated value of the second dosing factor (K2) and the larger (Kf) of these two calculated values is used to dose the demercurisation reagent.

2. Method according to claim 1, in which the second function (g) is of the form exp(-(t-t0)/Y) where t is the instant under consideration and Y is equal to the quantity of mercury (Q) calculated at the instant under consideration, multiplied by a constant of proportionality.

3. Method according to claim 1, in which the second function (g) is of the form 1-((t-t0)/Y) where t is the instant under consideration and Y is equal to the quantity of mercury (Q) calculated at the instant under consideration, multiplied by a proportionality constant.

4. Method according to claim 1, in which the second function (g) is of the form 1/(cosh((t-t0)/Y) where t is the instant under consideration and Y is equal to the quantity of mercury (Q) calculated at the instant in question, multiplied by a proportionality constant.

5. Method according to any one of the preceding claims, in which the first function (f) is strictly increasing between a minimum magnitude (Cmin) and a maximum magnitude (Cmax) of the upstream concentration value (Ca), and is constant both below said minimum magnitude and above said maximum magnitude.

6. Method according to any one of claims 1 to 4, in which the first function (f) is strictly increasing between a zero value of the upstream concentration value (Ca) and a maximum magnitude of the upstream concentration value (Ca), and is constant beyond said maximum magnitude.

7. Method according to any one of claims 1 to 4, in which the first function (f) is stepped.

8. Method according to any one of the preceding claims, in which the occurrence of a measurement peak is monitored by applying, at each instant, a monitoring algorithm to the N upstream concentration values (Ca) determined just before the instant in question, N being greater than or equal to 3.

9. Method according to claim 8, wherein the monitoring algorithm is a Savitzky-Golay filter.

10. Method according to claim 9, in which the Savitzky-Golay filter is applied to the N upstream concentration values (Ca) determined just before the instant in question, N being greater than or equal to 6.

11. Method according to any one of the preceding claims, in which, at each instant, a downstream concentration value (Cb) is also determined for the concentration of mercury downstream of the gas-solid separator (20), and in which, from the downstream concentration value (Cb), the greater (Kf) of the two calculated values of the first and second dosing factors (K1, K2) is corrected before being used to dose the demercurisation reagent.

12. Method of claim 11, wherein the greater (Kf) of the two calculated values of the first and second metering factors (K1, K2) is corrected using a PID algorithm.

13. Method according to any one of the preceding claims, wherein the predetermined time period (T) is between 15 and 120 minutes.

14. Method according to any one of the preceding claims, in which, after a predetermined time, for example of between 1 and 15 minutes, from the instant t0, a filter cake of the gas-solid separator (20) is removed by applying a forced unclogging sequence to the gas-solid separator.

15. Process according to any one of the preceding claims, in which, for a predetermined period of time, for example of between 1 and 15 minutes, starting from the instant t0, an acid gas neutralisation reagent introduced into the fumes to be treated upstream of the gas-solid separator (20) is overdosed.
